(19) Europäisches Patentamt
European Patent Office
Office européen des brevets

(11) **EP 0 933 285 A2**

(12) **EUROPEAN PATENT APPLICATION**

(43) Date of publication:
**04.08.1999 Bulletin 1999/31**

(51) Int Cl.⁶: **B62D 5/04**

(21) Application number: **99400140.2**

(22) Date of filing: **21.01.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **28.01.1998 JP 1575898**

(71) Applicant: **Mitsuba Corporation Kiryu-shi, Gunma (JP)**

(72) Inventors:
- **Onodera, Tsugio Kiryu-shi, Gunma (JP)**
- **Kodaira, Tadao Kiryu-shi, Gunma (JP)**
- **Taniguchi, Yoshiaki Kiryu-shi, Gunma (JP)**

(74) Representative: **Rousset, Jean-Claude et al Cabinet Netter 40, rue Vignon 75009 Paris (FR)**

(54) **Electric power steering unit**

(57) An electric power steering unit comprises a rack-shaft 2 to be coupled to the guiding wheels of a vehicle, a housing A for slidably containing the rack-shaft 2 and holding therein a coupling section 6 for causing the teeth of the rack-shaft 2 to engage those of a pinion arranged on the steering column 5 linked to the steering handle of the vehicle, an electric motor 1 coaxially arranged around the rack-shaft 2 to supply assisting power to the rack-shaft 2, a ball screw mechanism 3 for connecting a nut section 19 linked to the armature shaft 11 of the motor 1 with a screw section 30 formed on the rack-shaft 2 by disposing ball 31 therebetween and for transmitting the rotary power of the motor 1 to the rack-shaft 2 as assisting power for steering and a housing B for containing and holding the ball screw mechanism 3. The ratio L1/L2 between a distance L1 from the ball screw mechanism 3 to the housing B and a distance L2 from the coupling section 6 to an outer end of the housing A is set to 0.8 to 1.2.

EP 0 933 285 A2

## Description

BACKGROUND OF THE INVENTION

1. Field of the Invention

This invention relates to an electric power steering unit to be used for a vehicle and, more particularly, it relates to a field of technology effectively applicable to electric power steering gears to be used for rack and pinion type steering systems.

2. Related Art Statement

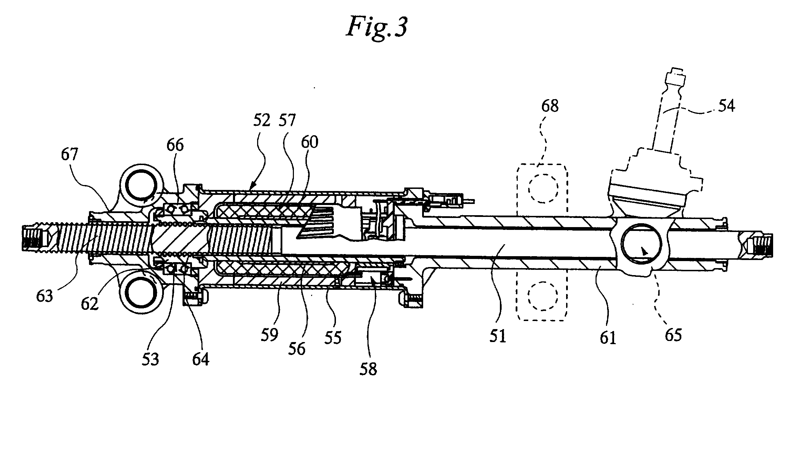

In recent years, most vehicles are equipped with a so-called power steering gear, and various type power steering unit, such as a hydraulically or electrically operated type power steering unit has been designed to assist the steering power of the vehicle. In these electric power steering units, as one for applicable to rack and pinion type steering systems, a unit which the steering assisting power is obtained by an electric motor arranged coaxially with a rack-shaft is known. FIG. 3 is a cross-sectional view showing the structure of a conventional electric power steering unit.

An electric power steering unit shown in FIG. 3, comprises an electric motor 52 arranged coaxially with a rack-shaft 51 so that the steering assisting power generated by the motor 52 is transmitted to the rack-shaft 51 by way of a ball screw mechanism 53. Then, the guiding wheels of the vehicle can be turned by utilizing both the manual steering power of the driver and the steering assisting power.

The rack-shaft 51 is linked to the guiding wheels typically by way of tie rods or knuckle arms arranged at the respective opposite ends thereof and also linked to the steering column 54 that is coupled to the steering wheel by way of a rack and pinion gear so that it may be reciprocatively moved in the horizontal directions of FIG. 3 as the steering operation by the driver. The motor 52 has a cylindrical yoke 55 containing coaxially therein a cylindrical armature shaft 56 and a field device 57 and is fed with power from a power supply section 58. The field device 57 comprises magnets 59 arranged on the inner peripheral portion of the yoke 55 and an armature core 60 arranged on the outer peripheral portion of the armature shaft 56. The rotary power generated by the motor 52 is transmitted to the rack-shaft 51 and the power is converted into the reciprocatively movement by way of a ball screw mechanism 53 arranged at the left end of the armature shaft 56 in FIG. 3, so that steering power is assisted.

With a power steering unit having the above described configuration, the rack-shaft 51 is substantially supported at two points including the coupling section connecting itself to the steering wheel 54 and the ball-screw mechanism 53. Firstly, since the rack-shaft 51 is coupled at an end thereof (left side end in FIG. 3) to the steering wheel 54 by means of a gear engagement by a rack and pinion gear system, it provides a point of support for the rack-shaft 51. Additionally, a housing 61 holding the coupling section 65 is rigidly secured to the vehicle main body by a bracket 68. Secondly, rack-shaft 51 is supported at the opposite end thereof (right side end in FIG. 3) by a ball-screw mechanism 53. The ball-screw mechanism 53 comprises a nut section 62 and a screw section 63 that are tightly combined together with balls 64 interposed therebetween. The nut 62 is held in a housing 67 by an angular bearing 65 so that it provides another point of support for the rack-shaft 51.

Here, an external force acts on the rack shaft 51 from the tie rod connected with both end portions of the shaft in accordance with rotation of the steering and running of the vehicle, and the rack shaft 51 is deflected with respect to the above-mentioned two support points situated as fulcrums. In this case, if the distance from the end portion of the rack shaft 51 to the fulcrums is equally divided by three, the amount of deflection caused by the external force can be minimized. However, in case of a conventional power steering unit, the product design is made in view of the on-vehicle layout and the relationship between the positions of the support points and the deflection of the rack shaft 51 is not taken into consideration.

That is, in case of designing a power steering unit, the position of the coupling section 65 is determined from the position of the steering shaft 54 connected to a steering handle not shown, from the view point of the on-vehicle layout. In compliance with the position of the coupling section 65, an electric motor 52 and the like are provided, and then, the position of the ball screw mechanism 53 is determined. Consequently, the position relationship between the support points is determined under limitation from the on-vehicle layout, and it is not possible to achieve ideal dimension setting as described above. Optimization of the position relationship is not much considered. Therefore, unit design is arranged such that the deflection of the rack shaft 51 escapes, and kinks and operation errors are prevented by providing a clearance between the armature shaft 56 and the rack shaft 51. However, the size of the unit is enlarged if such a clearance is provided in the unit, and reduction of the size and weight of the unit is hindered.

SUMMARY OF THE INVENTION

The object of the present invention is to reduce the size and weight of the unit by minimizing deflection of the rack shaft.

According to the invention, there is provided an electric power steering unit comprising a rack-shaft to be coupled to the guiding wheels of a vehicle, a first housing for slidably containing the rack-shaft and holding therein a coupling section for causing the teeth of the rack-shaft to engage those of a pinion arranged on the steering column linked to the steering handle of the vehicle, an electric motor coaxially arranged around the rack-shaft to supply assisting power to the rack-shaft, a ball screw mechanism for connecting a nut section linked to the armature shaft of the electric motor with a screw section formed on the rack-shaft by disposing ball members therebetween and for transmitting the rotary power of the electric motor to the rack-shaft as assisting power for steering and a second housing for containing and holding the ball screw mechanism. A ratio L1/L2 between a distance L1 from the ball screw mechanism to the second housing and a distance L2 from the coupling section to an outer end of the first housing is set to 0.8 to 1.2.

Preferably, the distance L1 and the distance L2 are set to an equal dimension.

Further, in this manner, deflection of the rack shaft can be substantially reduced to minimum. Accordingly, the clearance through which deflection of the rack shaft escapes can be minimized and the size and weight of the unit can be reduced.

The above-described and other objects, and novel feature of the present invention will become apparent more fully from the description of the following specification in conjunction with the accompanying drawings.

BRIEF DESCRIPTION OF THE DRAWINGS

FIG. 1 is a cross-sectional view showing the entire structure of the electric power steering unit as the embodiment 1 of the present invention.

FIG. 2 is an explanation view enlarged cross-sectional view schematically illustrating the supporting state of the rack shaft in the electric power steering unit shown in FIG. 1.

FIG. 3 is a cross-sectional view showing the structure of a conventional electric power steering unit.

DESCRIPTION OF THE PREFERRED EMBODIMENT

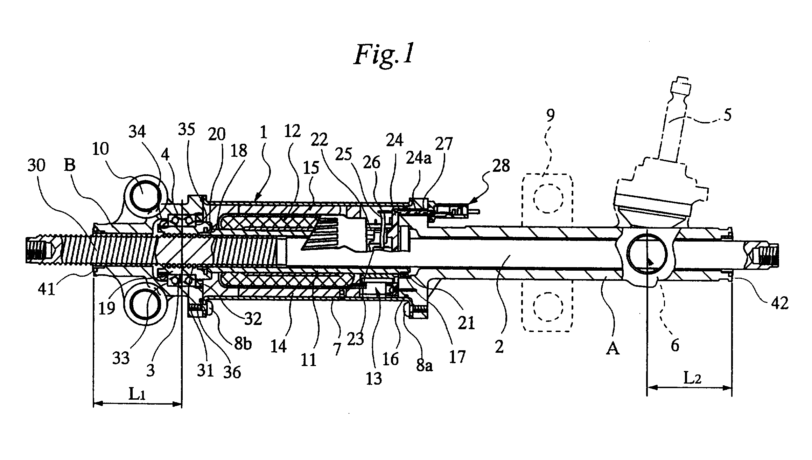

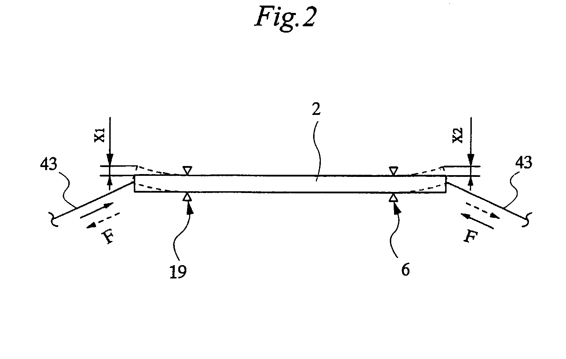

Now, the invention will be described in greater detail by referring to the accompanying drawings that illustrate preferred embodiments of the invention. FIG. 1 is a cross-sectional view showing the entire structure of an electric power steering unit (hereinafter referred to as "power steering unit") as an embodiment of the present invention. FIG. 2 is an explanatory view schematically illustrating the supporting state of the rack shaft in the power steering unit shown in FIG. 1. In the power steering unit according to the present invention, supporting points for the rack shaft are arranged at positions where deflection of the rack shaft is minimized, and the clearance with respect to deflection of the rack shaft is reduced, so that the size and weight of the unit is reduced.

As seen from FIG. 1, the electric power steering unit is provided with an electric motor 1 having a hollow central area and arranged around a rack-shaft 2 as in the case of the conventional power steering units shown in FIG. 3 and, for example, the unit is fitted to the steering gear of the wheels of a vehicle that are typically the front wheels. The steering assisting power generated by the motor 1 is transmitted to the rack-shaft 2 via a ball screw mechanism 3 to reduce the physical load for steering the vehicle on the part of the driver.

As shown in FIG. 1, the power steering unit further comprises a housing A and a housing B, which are securely coupled to yoke 7 of the motor 1 by means of a plurality of respective screws 8a and 8b, and the rack-shaft 2 is arranged in them in such a way that it may be moved to the right and the left direction in FIG. 1. Then, the power steering unit is fitted to the vehicle main body by means of a bracket 9 and fitting holes 10 of the housing B and, at the same time, the wheels are linked to the respective ends of the rack-shaft 2 by means of tie rods or knuckle arms.

The housing A is a hollow member typically made of cast iron or die-cast aluminum and a coupling section 6 is arranged at the right side end of the unit in FIG. 1 for coupling the rack-shaft 2 with the steering column 5 of the vehicle that is further linked to the steering wheel. In this coupling section 6, a pinion (not shown) arranged on the steering column 5 and the teeth of a rack arranged on the outer side portion of the rack-shaft 2 are engaged with each other so that the rotary motion of the steering column 5 is converted into a reciprocative motion of the rack-shaft 2 that moves right and left direction in FIG. 1. In this case, the coupling section 6 is so designed as to support the rack-shaft 2 by gear engagement. Note, a torque sensor (not shown) is arranged on the coupling section 6 to detect the torque of the steering column 5 so that the power output of the motor 1 may be controlled as a function of the detected torque.

The motor 1 has a cylindrical yoke 7 containing coaxially therein a cylindrical armature shaft 11 and a field device 12. The rack-shaft 2 is assembled to runs through the inside of the armature shaft 11. The field device 12 comprises a plurality of magnets 14 arranged on the inner peripheral surface of the yoke 7 and an armature core 15 arranged on the outer peripheral portion of the armature shaft 11 and is fed with electric power from a power supply section 13.

The yoke 7 is a hollow and cylindrical member made of iron and having a profile of a cylindrical pipe with a substantially constant thickness. It contains therein the field device 12 and the power supply section 13. The yoke 7 is securely and airtightly connected to the housing A at the right side end thereof in FIG. 1 by means of a plurality of screws 8a and an O-ring 16. On the other hand, it is securely connected to the housing B at the left side end in FIG. 1 also by means of a plurality of screws 8b.

The magnets 14 of the field device 12 operates as field poles and are arranged peripherally at regular intervals in the yoke 7. On the other hand, the armature shaft 11 is held at an end thereof (the right side end in FIG. 1) by a bearing 17 fitted to the housing A and provided on the other end (the left side end in FIG. 1) with a tapered spline 18, which is engaged with a corresponding spline 20 formed at an end of a nut section 19 of the ball-and-screw mechanism 3 so that the rotary motion of the armature shaft 11 is transmitted to the nut 19.

A rubber member 21 is fitted to a right side portion of the bearing 17 to urge the armature shaft 11 against the side of the nut 19 by means of the elastic force of the rubber 21. Thus, the spline 18 is urged against and engaged with the spline 20 so that the rotary motion of the armature shaft 11 is securely transmitted to the nut 19. Because of the rubber 21 arranged on the right side of the bearing 17, the armature shaft 11 is held in position but allowed to move to a small extent. Note that the rubber 21 can be replaced by an equivalent member that may be made of any appropriate material and have any contour so long as it axially urges the armature shaft 11. For example, it may be replaced by a coned disc spring, a wave washer or a member made of synthetic resin.

The power supply section 13 is designed to feed the armature with electricity and comprises a commutator 22 rigidly secured to the armature shaft 11 and a brush 23 held in contact with the peripheral surface of the commutator 22 to provide electric contact points between them. The brush 23 is held in a brush holder formed integrally with a brush holder stay 24 that is made of synthetic resin and pressed against the commutator 22 under a predetermined pressure by means of an elastic member (not shown). On the other hand, a terminal plate 26 having an end connected to a pig tail 25 of the brush 23 by spot welding is made to run through a projecting section 24a of the stay 24 by means of an insertion molding technique. Then, the stay 24 is secured to the housing A with screws in such a way that the front end of the section 24a is projecting to the outside through a hole 27 of the housing A. Thus, the plate 26 projects from the housing A with the section 24a of the brush holder stay 24 to form a power supply terminal.

The housing B is, like the housing A, a hollow member typically made of cast iron or die-cast aluminum and provided in the inside with a ball-and-screw mechanism 3. The ball-and-screw mechanism 3 per se is known and comprises the nut 19, a screw section 30 formed on the outer peripheral wall of the rack-shaft 2 and a number of balls 31 arranged between the nut 19 and the screw 30. The rack-shaft 2 is supported by the nut 19 in such a way that its rotary motion around the axis of rotation is restricted but it is reciprocated right and left direction in FIG. 1 as the nut 19 is rotated.

The nut 19 is axially rotatable relative to the housing B with an angular bearing 4 interposed therebetween and securely fitted to the housing B. Thus, the nut 19 of the ball-and-screw mechanism 3 and the angular bearing 4 are combined to form a unitary member and arranged in the housing B that is separated from the housing A. In this case, the angular bearing 4 is securely held between a bearing holder ring 32 screwed into an opening of the housing B and a stepped section 33 formed in the housing B to restrict its axial movement. The relative axial movement of the nut 19 and the angular bearing 4 is restricted by another bearing holder ring 34 screwed into the left end of the nut 19 and another stepped section 35 formed on the outer peripheral wall of the nut 19.

On the other hand, in the power steering unit shown in FIG. 1, the distance from two supporting points of the rack shaft 2 to the outer ends of the housings A and B are equally arranged. That is, the distance L1 to the outer end 41 (in the left end in the figure) of the housing B from the nut 19 of the ball screw mechanism 3 is equal to the distance L2 to the outer end 42 (in the right end in the figure) of the housing A from the coupling section 6.

Here, an external force F acts on the rack shaft 2 from the tie rod 43 when turning the steering handle, as shown in FIG. 2, and the rack shaft 2 is deflected as described above. In this time, the rigidity ratio between the left and right supporting points is expressed as follows where deflections at left and right ends of the rack shaft 2 are x1 and x2.

$$x1/F : x2/F$$

In order to minimize the deflection amount of the rack shaft 2, the rigidity must be equal at the left and right supporting points. Where the distances between the supporting points and both ends of the rack shaft 2 are distances L1' and L2', the following equation must be satisfied.

$$L1' : L2' = x1/F : x2/F$$

In this case, L1' and L2' are values which change in accordance with the movement of the rack shaft 2 and therefore cannot be said to be suitable for practical use. Hence, in the present invention, the distance L1 from the center of the nut 19 of the ball screw mechanism 3 to the outer end 41 of the housing B and the distance L2 from the coupling section 6 to the outer end 42 of the housing A are adopted as values which can be fixed on design and can be used as approximate values in place of L1' and L2'. The following is obtained by applying the values to the equation (2).

$$L1 : L2 = x1/F : x2/F$$

$$L1 = L2 \times (x2/F) \times (F/x1)$$
$$= L2 \times (x2/x1)$$

That is, in order to satisfy the rigidity condition described above, L1 must be set to the value of $L2 \times (x2/x1)$. However, since $(x2/x1) \fallingdotseq 1$ exists in practical use, the rigidity condition described above is substantially satisfied if L1=L2 is satisfied. According to experiments made by the present inventors, deflection of the rack shaft 2 can be substantially reduced to minimum if L1/L2 is set so as to satisfy $0.8 \leqq L1/L2 \leqq 1.2$. In addition, with respect to "x2/x1", deflection can be substantially reduced to minimum within the range of $0.5 \leqq x2/x1 \leqq 1.5$ if L1=L2 is satisfied.

Thus, in the present power steering unit, the distances from the outer ends of the housings A and B to the supporting points are equalized to each other in both sides, in the rack shaft 2 supported by the two points of the ball screw mechanism 3 and the coupling section 6. In this manner, deflection of the rack shaft 2 can be substantially reduced to minimum. Accordingly, the clearance which allows deflection of the rack shaft 2 to escape can be minimized, so that the size of the unit can be reduced advantageously in view of the costs.

The above described embodiment of power steering unit is assembled in a manner as described below.

Firstly, said four major components are prepared. The rubber member 21, the bearing 17, the brush holder stay 24 and other parts are fitted to the housing A. Then, the magnets 14 and other parts are fitted to the inside of the yoke 7. The armature core 15, the commutator 22 and other parts are arranged on the armature shaft 11. The ball-screw mechanism 3 combining the angular bearing 4 and the rack-shaft 2 are arranged in the housing B.

Then, the housing A and the armature shaft 11 are fitted to each other and the yoke 7 is secured to the housing A by means of screws. The housing B carrying the rack-shaft 2 and the yoke 7 are secured to each other also by means of screws. Thereafter, the rack-shaft 2 put into the housing A is linked to the steering column 5 and the teeth of the pinion on the steering column 5 are made to engage with those of the rack on the rack-shaft 2.

For fitting the housing B to the yoke 7, the spline 18 formed on the end of the armature shaft 11 is engaged with the spline 20 formed on the nut 19, after then the yoke 7 and the housing B are secured to each other by means of screws. Thus, with this embodiment of power steering unit, the housing B can be secured to the yoke 7 after positionally regulating it in order to prevent the rack-shaft 2 from falling down and/or shaking so that any misalignment on the part of the rack-shaft 2 due to eccentricity from the center may be absorbed and corrected. Note that yoke 7 is provided with a hole 36 for receiving the screw 8b having a diameter greater than that of the screw 8b so that the housing B may be positionally regulated by utilizing the clearance between the screw 8b and the hole 36. And thereafter, the rack-shaft 2 put into the housing A is linked to the steering column 5 and the teeth of the pinion on the steering column 5 are made to engage with those of the rack on the rack-shaft 2.

Now, the embodiment of power steering unit of the invention operates in a manner as described below. Firstly, as the steering wheel is operated by the driver to turn the steering column 5 and the rack-shaft 2 is moved in the direction corresponding to the sense of rotation of the steering column 5 to carry out a necessary steering operation. At the same time, a steering torque sensor (not shown) detects the torque generated by the rotary motion of the steering column 5 and consequently the commutator 22 is supplied with electric power corresponding to the detected torque from the terminal plate 26 having the coupler 28 via the brush 23. As the motor 1 is driven to operate the armature shaft 11 and hence the nut 19 coupled to it are rotated. As the nut 19 rotates, the steering assisting power is transmitted to the rack-shaft 2 under the effect of the ball-and-screw mechanism 3, whereby the movement of the rack-shaft 2 is promoted and the steering power is assisted.

Detailed description has hereinabove been give of the invention achieved by the present inventor with reference to the embodiments. However, the present invention should not be limited to the embodiments described above and may be variously modified within the scope not departing from the gist.

For example, a brushless electric motor may be used for an power steering unit according to the invention. If such is the case, the field device has a core and magnets respectively arranged on the yoke side and the armature shaft side while the power supply section has a circuit board comprising conducting means and a detector for detecting the angular position of the armature shaft. Additionally, the present invention is applicable not only to front wheels steering unit but also to rear wheels steering unit having the same constitution and mounting condition as the front wheels steering unit.

Finally, while the present invention is described particularly in terms of power steering unit of motor vehicle, it may be applied to any industrial machines and vehicles provided with a steering system.

The advantages of the present invention may be summarized as follows.

That is, the distance from the supporting points of the rack shaft to the outer ends of the housings are set to be equal to each other in both sides of the rack shaft. In this manner, deflection of the rack shaft can be substantially reduced to minimum. Accordingly, the clearance which allows deflection of the rack shaft to escape can be minimized and the size and weight of the unit can be reduced advantageously in view of costs.

## Claims

1.  An electric power steering unit comprising a rack-shaft to be coupled to the guiding wheels of a vehicle, a first housing for slidably containing the rack-shaft and holding therein a coupling section for causing the teeth of the rack-shaft to engage those of a pinion arranged on the steering column linked to the steering handle of the vehicle, an electric motor coaxially arranged around the rack-shaft to supply assisting power to the rack-shaft, a ball screw mechanism for connecting a nut section linked to the armature shaft of the electric motor with a screw section formed on the rack-shaft by disposing ball members therebetween and for transmitting the rotary power of the electric motor to the rack-shaft as assisting power for steering and a second housing for containing and holding said ball screw mechanism, characterized in that:

    a ratio $L1/L2$ between a distance $L1$ from said ball screw mechanism to said second housing and a distance $L2$ from said coupling section to an outer end of said first housing is set to 0.8 to 1.2.

2.  A power steering unit according to claim 1, characterized in that: said distance $L1$ and said distance $L2$ are set to an equal dimension.

*Fig.1*

Fig.2

*Fig.3*

EP 0 933 285 A2